# EUROPEAN PATENT APPLICATION

(11) **EP 4 439 840 A1**
(43) Date of publication of application: **02.10.2024**
(21) Application number: 24167403.5
(22) Date of filing: 28.03.2024
(51) Int. Cl.: H01M 50/30

(54) **BATTERY MOUNTING BOX AND BATTERY PACK**

(30) Priority: 31.03.2023 CN 202320713458 U; 31.03.2023 CN 202320697957 U
(71) Applicant: Eve Energy Co., Ltd., Huizhou, Guangdong 516006 (CN)
(72) Inventor: XING, Jianguang, Huizhou, Guangdong 516006 (CN); CHEN, Zhiwei, Huizhou, Guangdong 516006 (CN)
(74) Representative: Murgitroyd & Company

(57) **Abstract**

A battery mounting box is provided and includes a body provided with a pressure relief hole; a supporting structure provided in the body and configured to support a battery module. The supporting structure includes a tray and at least one supporting rib provided at a bottom of the tray. The at least one supporting rib is configured to support between the tray and a bottom plate of the body such that a pressure relief cavity is formed between the tray and the bottom plate. The pressure relief cavity and the pressure relief hole are in communication such that gas is capable of discharging through the pressure relief hole.

## Description

### TECHNICAL FIELD

The present application relates to the field of battery technologies, and more particularly, to a battery mounting box and a battery pack.

### BACKGROUND

Power battery pack in the related art each includes a box body and a tray disposed in the box body. Multiple electric cores are carried by the tray, a pressure relief cavity is formed between the tray and the box body, and a bottom bracket is provided in the box body to support the tray. At the time of installation, the bottom bracket needs to be mounted in alignment with the tray, which results in a complicated structure inside the box body, complicated installation, and a large number of components. So, the weight of the box body is increased.

### SUMMERY

According to embodiments of the present application, it is provided a battery mounting box and a battery pack to solve the above-mentioned technical problems.

In a first aspect, according to embodiments of the present application, it is provided a battery mounting box including a body provided with a pressure relief hole; a supporting structure provided in the body and configured to support a battery module, wherein the supporting structure includes a tray and at least one supporting rib provided at a bottom of the tray, the at least one supporting rib is configured to support between the tray and a bottom plate of the body such that a pressure relief cavity is formed between the tray and the bottom plate, and the pressure relief cavity and the pressure relief hole are in communication such that gas is capable of discharging through the pressure relief hole.

In a second aspect, according to embodiments of the present application, it is provided a battery pack including a battery module, and the battery mounting box described above, in which the supporting structure in the battery mounting box is configured to support the battery module.

### BENEFICIAL EFFECT

According to embodiments of the present application, the beneficial effects are as follows. A battery mounting box is provided, supporting rib(s) are provided at the bottom of the tray, and are configured to support between the bottom plate of the body and the tray, so that a pressure relief cavity can be formed between the tray and the bottom plate. When the battery occurs thermal runaway, gas is discharged into the pressure relief cavity, and gas is finally discharged through the pressure relief hole in the body. That is, by forming the supporting rib(s) at the bottom of the tray, the pressure relief cavity can be formed between the tray and the bottom plate of the body by the support of the supporting rib(s). Accordingly, the step of installing the bottom bracket and the tray is decreased, thereby simplifying the formation of the body, removing the bottom bracket, and enabling the body to be lightened.

### BRIEF DESCRIPTION OF THE DRAWINGS

FIG. 1 is a schematic structural diagram of a battery mounting box according to Embodiment 1 of the present application;
FIG. 2 is a schematic structural diagram of the battery mounting box of FIG. 1 after an upper cover is hidden;
FIG. 3 is a top view of the battery mounting box of FIG. 2 after the upper cover is hidden;
FIG. 4 is a schematic sectional view taken along direction A-A in FIG. 3;
FIG. 5 is a schematic structural diagram of the battery mounting box of FIG. 1 after the upper cover and a supporting structure are hidden;
FIG. 6 is a schematic structural diagram of the supporting structure of FIG. 2 from one perspective;
FIG. 7 is a schematic structural diagram of the supporting structure of FIG. 2 from another perspective;
FIG. 8 is a top view of the supporting structure of FIG. 7;
FIG. 9 is a schematic structural diagram of the battery mounting box of FIG. 1 after the upper cover, the supporting structure, and a partial frame are hidden;
FIG. 10 is a schematic structural diagram of a frame and a longitudinal beam of FIG. 2;
FIG. 11 is a schematic structural diagram of a battery mounting box according to Embodiment 2 of the present application;
FIG. 12 is a top view of the battery mounting box of FIG. 11;
FIG. 13 is a schematic sectional view taken along direction A-A of FIG. 12;
FIG. 14 is an enlarged schematic diagram at detail I in FIG. 13;
FIG. 15 is an exploded schematic view of a transverse beam and an adapter structure of FIG. 11;
FIG. 16 is a schematic structural diagram of the adapter structure of FIG. 11 from one perspective;
FIG. 17 is a schematic structural diagram of the adapter structure of FIG. 11 from another perspective; and
FIG. 18 is an exploded schematic view of a battery mounting box according to embodiments of the present application.

### List of reference signs:

100-battery mounting box, 10-body, 101-first reinforcing rib, 102-second reinforcing rib, 11-accommodating space, 111-pressure relief hole, 12-upper communication portion, 121-first cavity, 13-lower supporting portion, 131-second cavity, 132-second reinforcing plate, 14-second blocking plate, 15-third blocking plate, 16-first partial frame, 17-second partial frame, 18-bottom plate, 181-third reinforcing rib, 19-partition plate, 20-beam body, 21-pressure relief channel, 22-longitudinal beam, 221-pressure relief communication port, 222-first supporting plate, 223-reinforcing plate, 23-transverse beam, 231- first communication port, 232-second supporting plate, 24-frame, 30-adapter structure, 31-first communication portion, 311-second communication port, 312-lower cavity, 32-second communication portion, 321-third communication port, 322-upper cavity, 323-stepped notch, 324-first blocking plate, 33-first reinforcing plate, 34-adapter-structure pressure relief cavity, 40-supporting structure, 41-tray, 411-positioning hole, 42-supporting rib, 43-pressure relief cavity, 431-exhaust passage, 50-hanging lug, 501-through hole, and 60-upper cover.

### DETAILED DESCRIPTION

### Embodiment 1

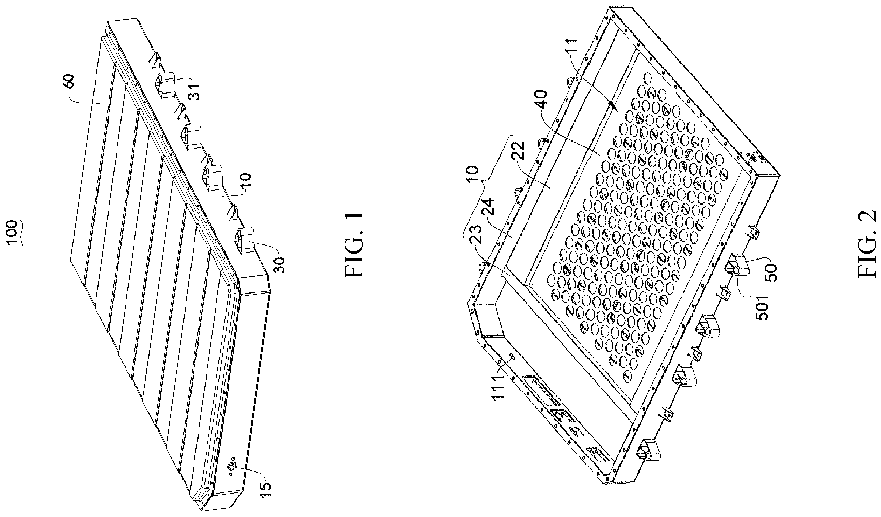

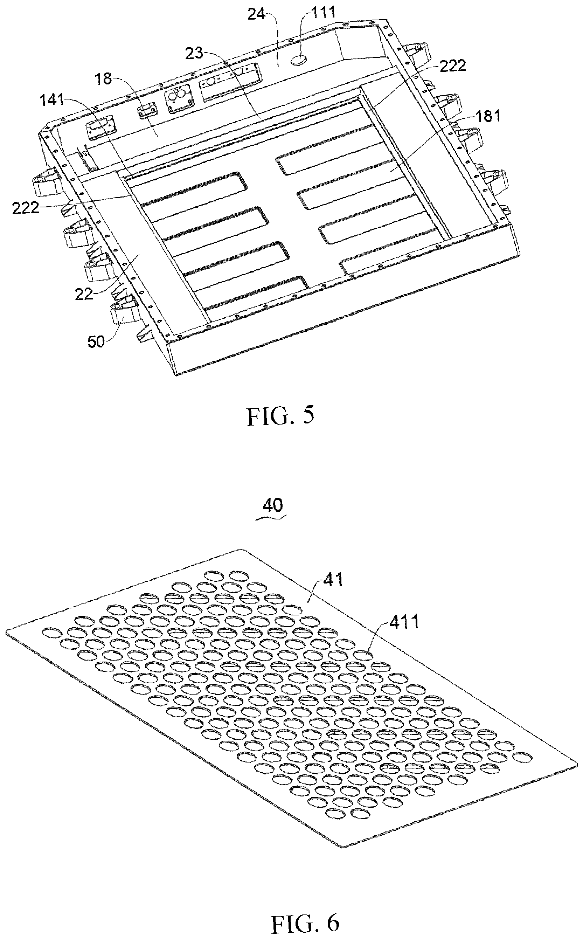

Referring to FIGS. 1 to 10, a battery mounting box 100 according to embodiments of the present application includes a body 10 and a supporting structure 40.

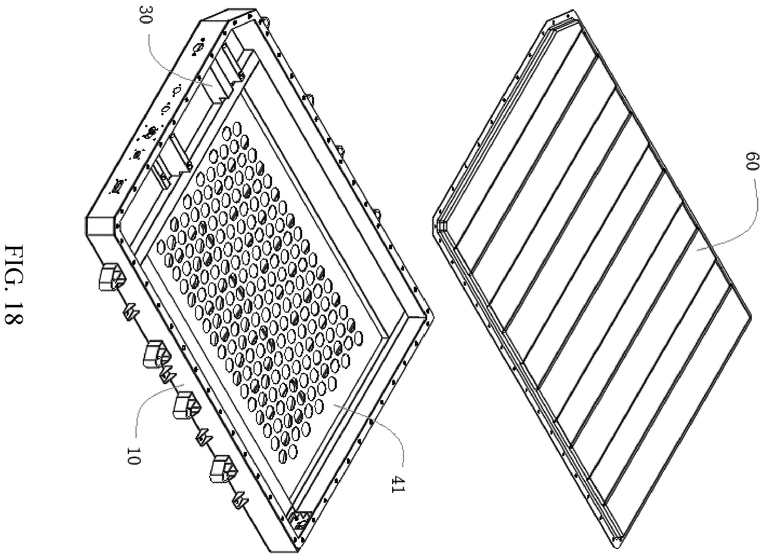

Referring to FIGS. 1 to 18, the body 10 is provided with a pressure relief hole 111. The supporting structure 40 is provided in the body 10 and is configured to support a battery module. The supporting structure 40 includes a tray 41 and at least one supporting rib 42 provided at the bottom of the tray 41. The at least one supporting rib 42 is configured to support between the tray 41 and the bottom plate 18 of the body 10 so that a pressure relief cavity 43 is formed between the tray 41 and the bottom plate 18. The pressure relief cavity 43 communicates with the pressure relief hole 111 so that gas can be discharged through the pressure relief hole 111.

According to the battery mounting box 100, supporting rib(s) 42 are provided at the bottom of the tray 41 and are configured to support between the bottom plate 18 of the body 10 and the tray 41, so that a pressure relief cavity 43 can be formed between the tray 41 and the bottom plate 18. When the battery occurs the thermal runaway, gas is discharged into the pressure relief cavity 43, and the gas pressure is finally discharged through the pressure relief hole 111 in the body 10. That is, by means of forming the supporting rib(s) 42 at the bottom of the tray 41, the pressure relief cavity 43 can be formed between the tray 41 and the bottom plate 18 of the body 10 by the support of the supporting rib(s) 42, thereby reducing the step of installing the bottom bracket and the tray 41. So, the formation of the body 10 is simplified, the bottom bracket is removed, and the body 10 is enabled to be lightened.

The battery according to the present embodiments is described by taking a cylindrical battery as an example. The tray 41 is configured to support the cylindrical battery, and portions of the tray 41 which each install correspondingly a cylindrical battery are provided with respective positioning holes 411. The positioning holes 411 communicate with the pressure relief cavity 43 in the height direction of the cylinder, so that the gas ejected when the cylindrical battery occurs the pressure relief can flow into the pressure relief cavity 43.

Referring to FIGS. 2 to 5, in embodiments of the present application, the body 10 includes a frame 24, a bottom plate 18, at least one longitudinal beam 22, and at least one transverse beam 23. The frame 24 and the bottom plate 18 are enclosed to form an accommodating space 11 in which each longitudinal beam 22 and each transverse beam 23 are provided. The frame 24 is provided with the pressure relief hole 111. The longitudinal beam 22 is provided with pressure relief communication port(s) 221 which communicate with the pressure relief cavity 43. The pressure relief communication port(s) 221 communicate with the pressure relief cavity 43 and the pressure relief hole 111. The longitudinal beam(s) 22, the transverse beam(s) 23, and the frame 24 are communicated in sequence. In other words, the longitudinal beam(s) 22, the transverse beam(s) 23, and the frame 24 are each provided with a pressure relief channel 21, and the pressure relief channels communicate with each other. When gas is generated in the pressure relief cavity 43, the flow path of the gas includes the pressure relief channel 21 in the longitudinal beam 22, the pressure relief channel 21 in the transverse beam 23, and the pressure relief channel 21 in the frame 24, and finally the gas is discharged from the pressure relief communication port 221 in the frame 24.

Here, when longitudinal beam(s) 22 and transverse beam(s) 23 are provided in the frame 24, the longitudinal beam(s) 22 and the side walls of the frame 24 are abutted with each other, and the transverse beam 23 is provided at one end of the longitudinal beams 22 to communicate with the longitudinal beams 22. In order to ensure the tightness of the pressure relief channels 21, the transverse beam 23 and the longitudinal beam 22 are connected by welding, thereby ensuring the tightness of the communication between the transverse beam 23 and the longitudinal beam 22.

Further, in order to ensure the molding of the longitudinal beam 22 and the frame 24 and simplify the installation steps, the longitudinal beam 22 and the frame 24 in the present embodiments are integrally molded so that the longitudinal beam 22 can be simultaneously molded when the frame 24 is molded, thereby simplifying the subsequent step of installing the frame 24 and the longitudinal beam 22 and improving the installation efficiency of the entire battery mounting box 100. At the same time, the overall structural strength of the frame 24 and the longitudinal beam 22 is improved.

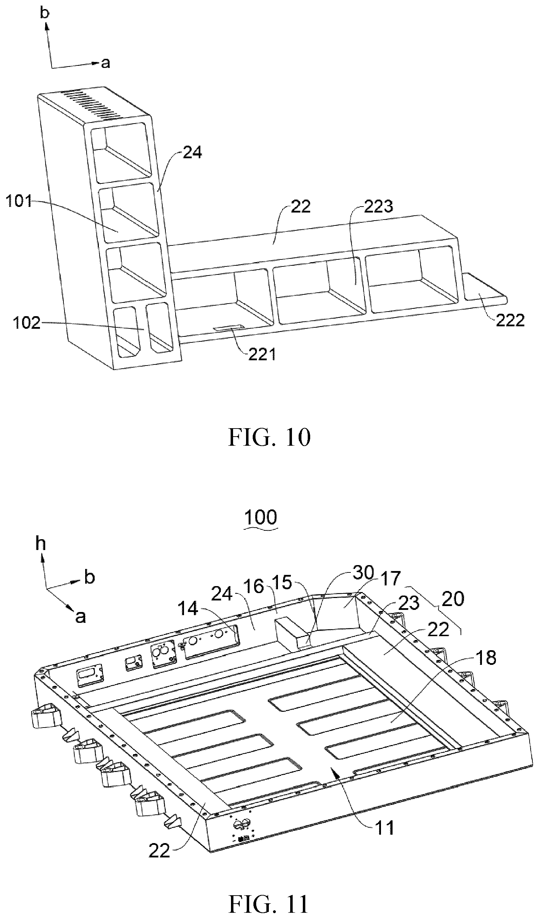

Referring to FIG. 10, the frame 24 and the bottom plate 18 are connected by welding. In order to ensure the connection strength of the frame 24 while enabling the frame 24 to be lightened, the frame 24 of the present embodiments is of a hollow structure. The hollow structure is provided with at least one first reinforcing rib 101 in a first direction a and at least one second reinforcing rib 102 in a second direction b, and the at least one second reinforcing rib 102 is connected with the bottom wall of the frame 24 and a corresponding first reinforcing rib 101. The first direction a and the second direction b are perpendicular. Specifically, the first direction a is a direction parallel to the longitudinal beam 22 and the transverse beam 23, and the second direction is a height direction of the frame 24. So, the structural strength of the frame 24 is increased by providing the first reinforcing rib(s) 101, and the structural strength of the whole frame 24 is ensured when the frame 24 and the bottom plate 18 are welded by providing the second reinforcing rib(s) 102. Meanwhile, the frame 24 in the present embodiments can simplify the structure of the mold cavity, facilitate the extrusion, and improve the molding efficiency.

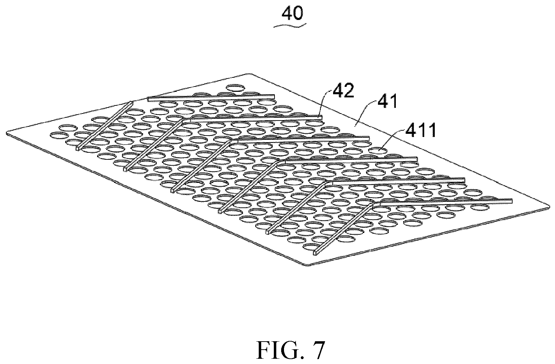

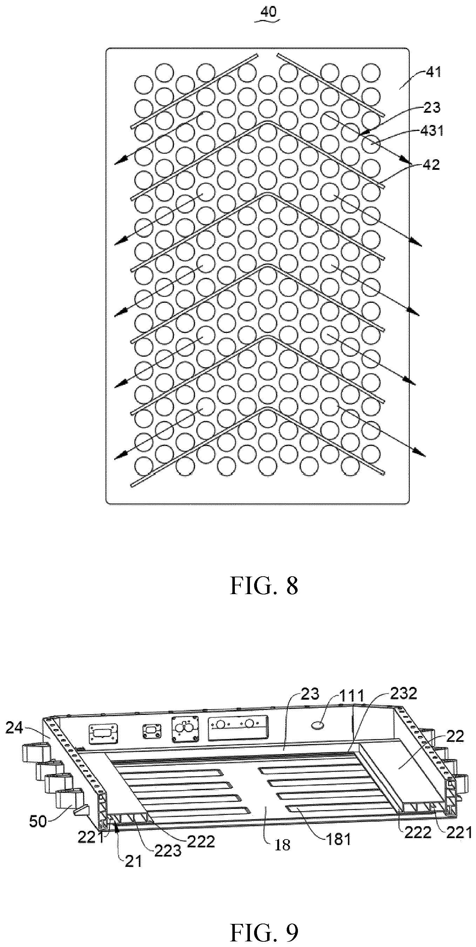

Specifically, referring to FIGS. 7 and 8, since the pressure relief communication port(s) 221 for communicating the pressure relief cavity 43 are provided on the longitudinal beam 22, when multiple supporting ribs 42 are provided on the tray 41, an exhaust passage 431 is formed between every two adjacent supporting ribs 42. That is, the exhaust passage 431 is a part of the pressure relief cavity 43, and the exhaust passage 431 is provided toward the longitudinal beam 22, so that by forming the exhaust passage 431 between the supporting ribs 42, the supporting ribs 42 can have a guide function. Specifically, the supporting ribs 42 guide the gas generated when the cylindrical battery occurs the thermal runaway to the longitudinal beam(s) 22, so that the gas can rapidly reach the respective pressure relief communication port 221 on the longitudinal beam(s) 22, thereby enabling the gas to be quickly discharged from the pressure relief hole 111 of the frame 24.

Here, when the pressure relief communication port(s) 221 are provided in the longitudinal beam 22, the pressure relief communication port(s) 221 may be provided in the side wall of the longitudinal beam 22 which faces towards the tray 41; or in one embodiment, the pressure relief communication port(s) 221 may be provided in the bottom wall of the longitudinal beam 22 which faces toward the bottom plate 18, so that the gas flow can be conducted. Further, when the body 10 is molded, the specific positions of the pressure relief communication port(s) 221 are provided based on the actual requirements. Meanwhile, when the pressure relief communication port(s) 221 are provided in the longitudinal beam 22, multiple pressure relief communication ports 221 which are spaced apart from each other may be provided, or only one pressure relief communication port 221 having a large opening area may be provided, which is not limited herein.

Referring to FIG. 9, specifically, the longitudinal beam 22 in the present embodiment is provided with one pressure relief communication port 221, and the pressure relief communication port 221 is provided at one end of the longitudinal beam 22 and is provided at this end away from the transverse beam 23. In order that the supporting ribs 42 sufficiently exert their guiding functions, the supporting ribs 42 are each obliquely arranged toward the respective pressure relief communication port 221. So, when the cylindrical battery ejects gas, the gas flow flows in the exhaust passage 431 formed between the supporting ribs 42 and flows toward the pressure relief communication port 221, so that the gas can rapidly flow into the pressure relief communication port 221.

When the inclined supporting ribs 42 are provided, in one embodiment, the supporting ribs 42 each may be a linear shape to form the exhaust passage 431 between the mutually parallel supporting ribs 42, so that a diversion effect are achieved by the linear-shaped supporting ribs 42. Specifically, since the body 10 includes two oppositely disposed longitudinal beams 22, the transverse beam 23 is connected to ends of the two longitudinal beams 22 which are located at one side. With respect to the arrangement of the pressure relief communication ports 221 of the two longitudinal beams 22, the shapes of supporting ribs 42 of the present embodiment are V-shaped, and the openings of the supporting ribs 42 face toward the pressure relief communication ports 221, so that when gas is ejected from the cylindrical battery, the gas flow flows in the V-shaped exhaust passages 431 and flows into the two pressure relief communication ports 221 each at the end of the longitudinal beam 22, since the supporting ribs 42 that are correspondingly arranged to be V-shaped are disposed correspondingly with the pressure relief communication ports 221 each at one end of the longitudinal beam 22.

With the supporting structure 40 in the present embodiments being installed in the body 10, the longitudinal beam 22 is provided with a first supporting plate 222 configured to support the tray 41, so that the tray 41 is supported by using the first supporting plate 222 on the longitudinal beam 22 in cooperation with the supporting ribs 42, that is, in cooperation with the bottom plate 18, so as to enhance the supporting strength of the body 10 on the tray 41. It will be appreciated that, at this time, there is a first distance between the first supporting plate 222 and the bottom plate 18 to prevent the flow of gas to the positioning holes 411 of the longitudinal beam 22 when the first supporting plate 222 and the bottom plate 18 are in direct contact with each other.

It will be appreciated that when the pressure relief communication port 221 is provided in the longitudinal beam 22, the bottom surface of the longitudinal beam 22 may be brought into contact with the bottom plate 18, and to support the longitudinal beam 22 by the bottom plate 18. The pressure relief communication port 221 is provided in a side wall of the longitudinal beam 22 which is in the height range corresponding to the first distance, so that the gas in the pressure relief cavity 43 can flow into the pressure relief passage 21 of the longitudinal beam 22. Alternatively, in another embodiment, there is also a distance between the longitudinal beam 22 and the bottom plate 18, and the pressure relief communication port 221 is provided on the bottom wall of the longitudinal beam 22 which faces toward the bottom plate 18. Thus, the gas flow can also be caused to flow from the pressure relief communication port 221 into the pressure relief passage of the longitudinal beam 22.

Specifically, in order to ensure the heat dissipation effect during pressure relief, in the present embodiment, when the longitudinal beam 22 is provided with the pressure relief communication port 221, there is the second distance between the longitudinal beam 22 and the bottom plate 18. The pressure relief communication port 221 is provided on the bottom wall of the longitudinal beam 22 which faces toward the bottom plate 18. In this way, the region between the longitudinal beam 22 and the bottom plate is also a part of the pressure relief cavity 43, and is also a flow region of the gas. Compared with a manner of directly contacting and abutting the bottom surface of the longitudinal beam 22 and the bottom plate 18, there is a second distance between the longitudinal beam 22 and the bottom plate 18, thereby increasing the flow area of the gas flow, facilitating the heat dissipation of the gas flow, and improving the heat dissipation effect of the gas flow.

Specifically, in order to improve the supporting strength of the entire body 10, third reinforcing ribs 181 are provided on the bottom plate 18 in the present embodiment, and the third reinforcing ribs 181 are configured to support the supporting ribs 42. So, the supporting strength of the bottom plate 18 is improved by providing the third reinforcing ribs 181, thereby ensuring impact resistance of the body 10 when the body 10 is constructed as a battery pack.

It will be appreciated that the first distance in the present embodiment may be set to be less than or equal to the second distance, which enables the effect of gas flow into the pressure relief communication port 221 of the longitudinal beam 22. When the first distance is set equal to the second distance, the bottom surface of the first supporting plate 222 and the bottom surface of the longitudinal beam 22 are flush with each other. When the first distance is less than the second distance, the bottom surface of the first supporting plate 222 is higher than the bottom surface of the longitudinal beam 22.

Specifically, in the present embodiment, the first supporting plate 222 is provided in a manner of the first distance being equal to the second distance, that is, both the longitudinal beam 22 and the first supporting plate 222 are supported by the third reinforcing ribs 181 on the bottom plate 18, so as to increase the supporting strength on the tray 41 as a whole. That is, the third reinforcing ribs 181 extend to the bottom portion of the partial longitudinal beam 22, and the heights of the third reinforcing ribs 181 are equal to the second distance between the longitudinal beam 22 and the bottom plate 18. Accordingly, the longitudinal beam 22 and the first supporting plate 222 are supported at the same time, thus indirectly reinforcing the supporting effect on the tray 41.

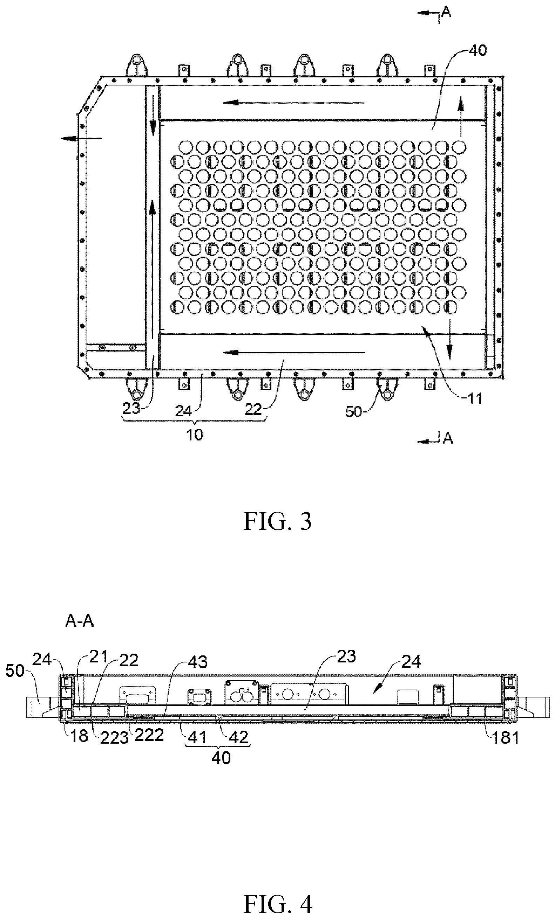

Referring to FIG. 4, in order to improve the structural strength of the longitudinal beam 22, at least one reinforcing plate 223 is provided in the longitudinal beam 22 in the lengthwise direction of the longitudinal beam 22, so that the supporting strength of the longitudinal beam 22 is improved by providing the reinforcing plate(s) 223 in the longitudinal beam 22. Specifically, the reinforcing plate 223 in the present embodiment is vertically provided, and a plurality of reinforcing plates 223 are provided in the longitudinal beam 22. The reinforcing plates 223 are provided separately, so that the structural strength of the longitudinal beam 22 is improved by providing the multiple reinforcing plates 223.

Further, in order to improve the supporting strength of the entire body 10, the transverse beam 23 in this embodiment is provided with a second supporting plate 232, and the second supporting plate 232 and the first supporting plate 222 are configured to jointly support the tray 41. That is, when the supporting structure 40 is provided in the body 10, the two first supporting plates 222 of the two longitudinal beams 22 and one second supporting plate 232 of the one transverse beam 23 are configured to simultaneously support the tray 41 to increase the supporting strength on the tray 41. Here, when the second supporting plate 232 is provided, the second supporting plate 232 is also arranged to form a first distance from the bottom plate 18. That is, the second supporting plate 232 can be supported by the third reinforcing ribs 181.

Referring to FIGS. 1 to 5, and FIG. 6, in embodiments of the present application, the battery mounting box 100 further includes a plurality of hanging lugs 50, which are spaced apart from each other on the outer wall of the body 10. The hanging lugs 50 and the frame 24 can be separately molded, so as to facilitate the molding of the chamfered hanging lugs, compared with the hanging lugs 50 and the frame 24 being integrally extruded in the existing production mode. So, the molding die is simpler, thereby improving the molding efficiency of the hanging lugs 50 and the frame 24.

Specifically, the hanging lugs 50 of the present embodiment are formed by extrusion, and are connected with the body 10 by welding, thereby facilitating the formation of each hanging lug 50 by extrusion.

Further, in order to reduce the weight of the hanging lugs 50, that is, to reduce the weight of the entire battery mounting box 100, the hanging lugs 50 are each of a hollow structure. That is, a through hole 501 is formed in each of the hanging lugs.

As shown in FIG. 3, the pressure relief mean of the gas in the present embodiment is that the gas flows from the longitudinal beams 22 to the transverse beam 23, and then is discharged from the pressure relief hole 111 of the frame 24.

It will be appreciated that in order to ensure the integrity of the battery mounting box 100, the battery mounting box 100 further includes an upper cover 60 configured to cover the body 10, and specifically, configured to cover the frame 24 to protect the battery module in the body 10.

The present application also provides, in another embodiment, a battery pack including a battery module and the battery mounting box 100 as described above, in which the supporting structure 40 in the battery mounting box 100 is configured to support the battery module.

Specifically, a plurality of positioning holes 411 are provided in the tray 41 in the supporting structure 40, and a cylindrical battery is correspondingly provided at each of the positioning holes 411. When the cylindrical battery occurs the thermal runaway, the gas discharged from the pressure relief valve in the cylindrical battery can flow to the pressure relief hole 111 of the body 10 through the pressure relief cavity 43 communicating with the positioning hole 411, so as to flow out through the pressure relief hole 111.

### Embodiment 2

A power battery pack in the related art includes a frame and a beam body disposed in the frame. The frame has a height higher than that of the beam body. The beam body is configured to support the battery module. A pressure relief hole is formed in the frame. A pressure relief channel is formed in the beam body, and the pressure relief hole and the pressure relief channel communicate with each other. So, gas generated when the battery occurs the thermal runaway can be sequentially discharged through the beam body and the frame.

The existing beam body and the existing frame communicate with each other by means of pipes. In order to match the position of the pressure relief hole on the frame and the position of the pressure relief channel on the beam body, to match the size of the pipe with a smaller diameter, and to ensure the structural strength of the frame, the arrangement position of the pressure relief hole on the frame is relatively low, and thus the communication portion between the frame and the pipe has a smaller region providing with the cavity, which does not help to block two sides of the region providing the cavity. Furthermore, the position of the pressure relief hole on the frame is lower, so the strength of the frame during welding with the bottom plate is relatively low.

Referring to FIGS. 11 to 18, the battery mounting box 100 according to embodiments of the present application is provided and includes a frame 24, a beam body 20, and an adapter structure 30.

Referring to FIGS. 11 to 13, a pressure relief hole 111 is provided in the frame 24, and the frame 24 forms a accommodating space 11. The beam body 20 is provided in the accommodating space 11, and a pressure relief channel 21 is formed in the beam body 20. The accommodating space 11 communicates with the pressure relief channel 21. The adapter structure 30 is provided in the accommodating space 11, and two ends of the adapter structure 30 communicate with the pressure relief channel 21 and the pressure relief hole 111. In the height direction h of the frame 24, one end of the adapter structure 30 which communicates with the pressure relief hole 111 has a height higher than that of the other end of the adapter structure 30 which communicates with the pressure relief channel 21.

It should be understood that when there is no pressure relief cavity in the body 10, the accommodating space 11 communicates directly with the pressure relief channel 21 in the beam body 20.

When the pressure relief cavity 43 in Embodiment 1 is formed between the tray 41 and the bottom plate 18 in the body 10, the pressure relief cavity 43 formed between the tray 41 and the bottom plate 18 is located in the accommodating space 11. In this case, the pressure relief cavity 43 communicates with the pressure relief channel 21 in the beam 20.

In the battery mounting box 100, the adapter structure 30 is provided in the frame 24, and one end of the adapter structure 30 which communicates with the pressure relief hole 111 has a height higher than that of the other end of the adapter structure 30 which communicates with the pressure relief channel 21 in the height direction h of the frame 24. In this way, since the adapter structure 30 has two communicating ends with different heights, when the pressure relief hole 111 is provided in the frame 24, the pressure relief hole 111 can be provided to have a height higher than that of the pressure relief channel 21. For example, in the height direction h of the frame 24, the pressure relief hole 111 can be provided in the upper portion of the frame 24, so that the reinforcing ribs can be provided in the cavity in a case where the lower portion of the frame 24 can be provided as a solid or a cavity, thereby ensuring the overall strength of the frame 24. At the same time, on the basis of ensuring the structural strength of the frame 24, the arrangement position of the pressure relief hole 111 can be located at the upper half of the frame 24, so that a wider width can be provided when the cavity communicating with the pressure relief hole 111 is opened in the frame 24. Accordingly, a large operation space is provided when the frame 24 is blocked, thereby facilitating the blocking of the cavity of the frame 24, and improving the structural strength and the preparation efficiency of the entire frame 24 by providing the adapter structure 30.

It should be noted that the arrangement height of the pressure relief hole 111 in the present embodiment is higher than the arrangement height of the pressure relief channel 21, which may be interpreted as the followings: the height of the center position of the pressure relief hole 111 may be higher than the height of the center position of the pressure relief channel 21; or the height of the upper end of the pressure relief hole 111 may be higher than the height of the upper end of the pressure relief channel 21 in the height direction of the frame 24. It will be appreciated that in either way, along the lengthwise direction of the frame 24, the projection of the pressure relief hole 111 on the pressure relief channel 21 may partially be overlapped or not overlapped with the pressure relief channel 21.

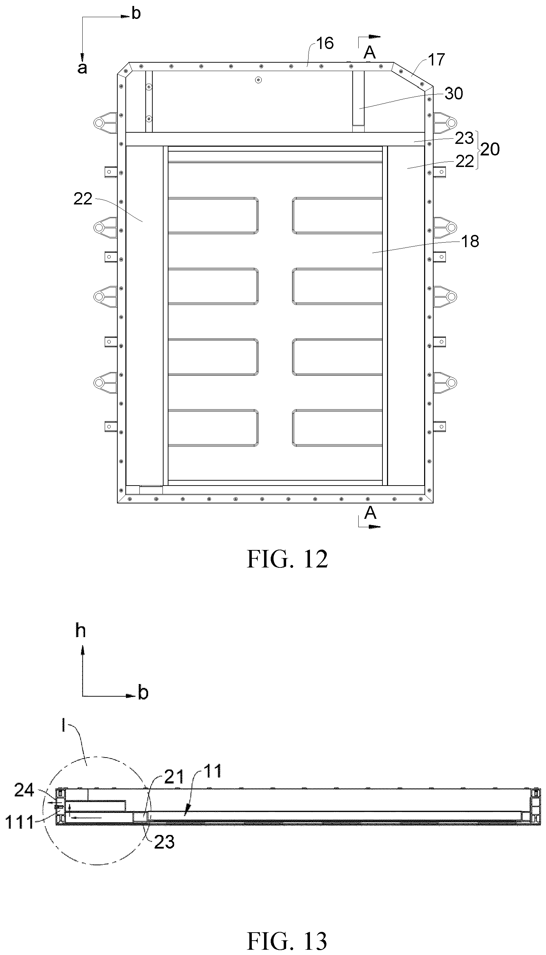

Specifically, referring to FIG. 13, when the pressure relief hole 111 and the pressure relief channel 21 in this embodiment are provided, the center position of the pressure relief hole 111 is higher than the center position of the pressure relief channel 21. A first cavity 121 is also formed in the frame 24 at a position corresponding to the pressure relief hole 111, and the first cavity 121 communicates with the pressure relief hole 111. The gas conveyed from the adapter structure 30 is first discharged through the first cavity 121 and then discharged via the pressure relief valve mounted on the pressure relief hole 111. In the height direction h of the frame 24, the projection of the first cavity 121 on the pressure relief channel 21 is partially overlapped with the pressure relief channel 21, so that the first cavity 121 can have a large arrangement area to achieve a quick pressure relief effect.

Referring to FIG. 11, FIG. 12 and FIG. 15, in one embodiment of the present application, in a case where the beam body 20 is provided in the frame 24, the beam body 20 includes a longitudinal beam 22 and a transverse beam 23. Each of the longitudinal beam 22 and the transverse beam 23 is provided with a pressure relief channel 21. The pressure relief channels 21 of both the longitudinal beam 22 and the transverse beam 23 communicate with each other in sequence. The longitudinal beam 22 is provided with a pressure relief communication port 221 communicating with a pressure relief cavity 43. The transverse beam 23 is provided with a first communication port 231 communicating with an adapter structure 30, and the adapter structure 30 communicates with the transverse beam 23 and the pressure relief hole 111. Since mounting regions of a water cooling system, a wiring harness, and the Battery Management System (BMS) are formed between the transverse beam 23 and the frame 24, the adapter structure 30 can be configured to communicate with the transverse beam 23. That is, in the mounting regions of the water cooling system, the wiring harness, and the BMS, an occupied space of the adapter structure 30 is arranged to match reasonably with the mounting space of the water cooling system, the wiring harness and the BMS, thereby contributing to a reasonable reduction in the occupied space of the battery mounting box 100, compared with the manner in which the adapting structure 30 is connected between the longitudinal beam 22 and the frame 24. In this above-mentioned manner, an increase in the extension width in the extension direction of the transverse beam 23 is required, so as to connect the adapting structure 30 between the transverse beam 23 and the frame 24.

Specifically, an extending direction of the longitudinal beam 22 is the lengthwise direction a of the frame 24, an extending direction of the transverse beam 23 is the widthwise direction b of the frame 24, and the frame 24 also has the height direction h.

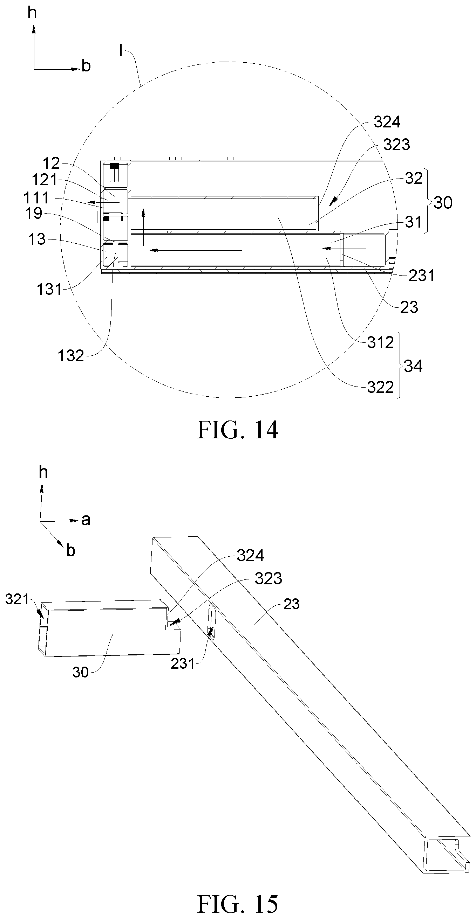

Specifically, referring to FIGS. 15 to 17, when the adapter structure 30 for connecting the pressure relief holes 111 and the pressure relief channels 21 at different positions is provided, the adapter structure 30 extends in the lengthwise direction of the longitudinal beam 11, that is, in the lengthwise direction a of the frame 24. The adapter structure 30 is provided with a second communication port 311 and a third communication port 321 which communicate with each other. The arrangement height of the third communication port 321 is higher than the arrangement height of the second communication port 311. The second communication port 311 communicates with the transverse beam 23. The third communication port 321 communicates with the frame 24. That is, by configuring the adapter structure 30 to extend in the lengthwise direction a of the longitudinal beam 11, the space occupied by the adapter structure 30 can be shortened to match the space of the frame 24. The adapter structure 30 is provided in the lengthwise and linear direction of the longitudinal beam 11 to facilitate the forming of the adapter structure 30, with respect to the adapter structure 30 formed by bending. Therefore, the production efficiency can be improved.

Specifically, corresponding to the arrangement of the second communication port 311 and the third communication port 321, the adapter structure 30 of the present embodiment includes a first communication portion 31 and a second communication portion 32 which communicate with each other. In the height direction h of the frame 24, the second communication portion 32 is provided on the top of the first communication portion 31. The first communication portion 31 is provided with the second communication port 311, and the second communication portion 32 is provided with the third communication port 321. That is, the first communication portion 31 is connected to the transverse beam 23, and the second communication portion 32 is connected to the frame 24. That is, the adapter structure 30 is configured to include the first communication portion 31 and the second communication portion 32 with different height positions, which can correspond to the structure of the transverse beam 23 and the structure of the frame 24. So, when pressure relief is required, pressure sequentially flows from the transverse beam 23 to the first communication portion 31, then to the second communication portion 32, and finally to be discharged from the pressure relief hole 111 in the frame 24 to realize pressure relief. At the same time, the adapter structure 30 provided in the present embodiment makes it possible to simplify the pressure relief, reduce the pressure drop and facilitate rapid discharge of the pressure in the accommodating space 11 from the pressure relief hole 111. In other embodiments, in order to save the space occupied by the entire adapter structure 30 in the height direction of the frame 24, the adapter structure 30 may be provided in such a manner that the adapter structure 30 is tubular. One pipe communicates with the transverse beam 23, another pipe communicates with the frame 24, and these two pipes interconnect with the corner piece, so that the pressure release of the transverse beam 23 towards the frame 24 can be realized.

Further, in order to facilitate rapid pressure relief, the adapter-structure pressure relief cavity 34 is formed in the adapter structure 30 in the height direction of the frame 24, and the adapter-structure pressure relief cavity 34 communicates with the pressure relief hole 111 and the pressure relief channel 21 of the transverse beam 23, respectively. By providing the adapter-structure pressure relief cavity 34 in the frame 24, rapid pressure relief can be facilitated, and the cross-sectional area of the adapter-structure pressure relief cavity 34 in the height direction h of the frame 24 can be larger, thereby further facilitating pressure relief. The weight of the adapter structure 30 is reduced and the formation of the adapter structure 30 is facilitated by constructing the adapter structure 30 as the cavity structure.

Specifically, a first reinforcing plate 33 is provided in the adapter-structure pressure relief cavity 34, and the first reinforcing plate 33 divides the adapter-structure pressure relief cavity into an upper cavity 322 and a lower cavity 312 which are communicated up and down. The lower cavity 312 is provided in the first communicating portion 31, and corresponding to the second communicating port 311. The upper cavity 322 is provided in the second communicating portion 32, and corresponding to the third communicating port 321. That is, an inner cavity is formed in the inner portion of the first communicating portion 31, and the inner cavity extends along the height direction h of the frame 24, so that the cross-sectional area of the lower cavity 312 in the height direction h of the frame 24 can be larger, thereby facilitating rapid pressure discharge and reducing the weight of the first communicating portion 31. At the same time, the interior of the second communication portion 32 is formed with an inner cavity which also extends along the height direction h of the frame 24. That is, the upper cavity 322 is formed so that the cross-sectional area of the upper cavity 322 in the height direction h of the frame 24 can be larger, thereby facilitating rapid discharge of pressure and reducing the weight of the second communication portion 32.

Specifically, the flow direction of the gas within the frame 24 is shown in FIG. 4. At the same time, the first reinforcing plate 33 extends along the extension direction of the longitudinal beam 22, that is, along the lengthwise direction of the frame 24. The first reinforcing plate 33 is provided between the first communication portion 31 and the second communication portion 32, thereby increasing the structural strength of the entire adapter structure 30 by increasing the first reinforcing plate 33.

It will be appreciated that, in order to facilitate the support and the installation on the water cooling system, the wiring harness, and the BMS, the upper surface of the adapter structure 30 in this embodiment is planar to fit the shape of the transverse beam 23, so as to be configured to support components such as the water cooling system, the wiring harness, and the BMS within the battery mounting box 100.

Specifically, the side walls of both the first communication portion 31 and the second communication portion 32 in the present embodiment are both flat-plate shaped, so that the first communication portion 31 and the second communication portion 32 can be mounted in correspondence with the water cooling system, the wiring harness, and the BMS, thereby enabling a supporting effect.

It will be appreciated that, since the water cooling system and a structure such as a pipe harness need to be laid above the transverse beam 23, in order to achieve the dodge and the reasonable spacial layout, a step-like notch 323 is formed in a part of the adapter structure 30 which faces toward the transverse beam 23, and the step-like notch 323 communicates with the upper side surface of the adapter structure 30. Specifically, a side of the second communication portion 32 which faces toward the transverse beam 23 forms the notch 323 above the first communication portion 31. That is, in the extension direction of the longitudinal beam 22, the length of the second communication portion 32 is smaller than the length of the first communication portion 31, so that the stepped notch 323 formed in the second communication portion 32 can facilitate installation of the wiring harness structure. Specifically, referring to FIG. 4, in the present embodiment, an opening of the stepped notch 323 formed by the second communication portion 32 is blocked by the first blocking plate.

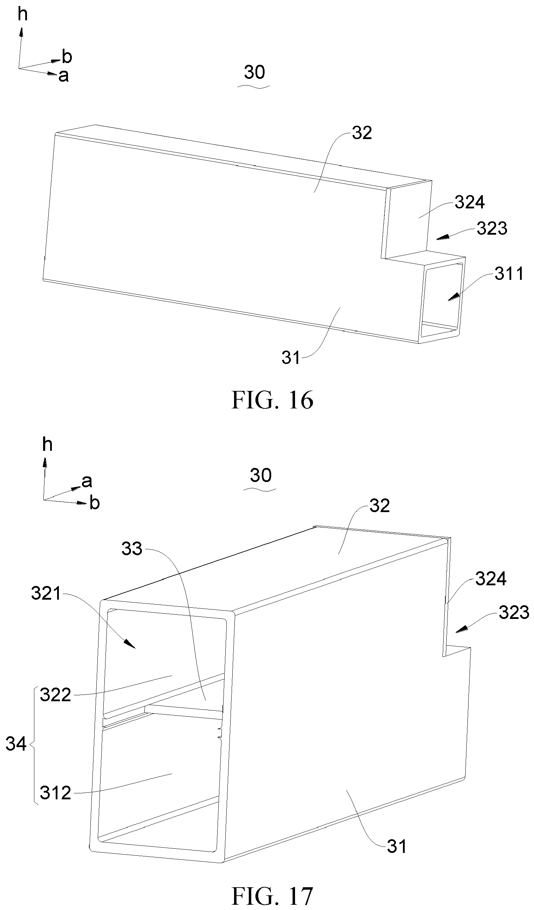

Referring to FIGS. 13 and 17, in order to enable the gas from the transverse beam 23 to smoothly flow to the frame 24, the first reinforcing plate 33 and the frame 24 have a distance d therebetween, so that the upper cavity 322 and the lower cavity 312 communicate with each other. So, the gas flows from the lower cavity 312 to the flow space of the upper cavity 322 through the distance d. In this way, the gas is enabled to smoothly flow from the transverse beam 23 to the frame 24. In other embodiments, in order to ensure the structural strength of the entire adapter structure 30, a through-hole may be provided in the first reinforcing plate 33 to form a flow space from the second communication port 311 to the third communication port 321 through the through-hole. Correspondingly, the first reinforcing plate 33 may be attached to the opposite side walls of the adapter structure 30 which are in the lengthwise direction of the longitudinal beam 22, so that the effect of improving the entire adapter structure 30 can be achieved.

In this embodiment, the first reinforcing plate 33 and the adapter structure 30 are integrally molded to facilitate the molding of the entire adapter structure 30. Specifically, since the second communication portion 32 is formed with the stepped notch 323 above the first communication portion 31, in order to facilitate the installation of the first communication portion 31 and the second communication portion 32, the first reinforcing plate 33 in this embodiment is connected to the first communication portion 31 and integrally formed with the first communication portion 31. That is, when the second communication portion 32 is performed the blocking operation, the installation of the first blocking plate is facilitated. The first blocking plate is welded to the end of the first reinforcing plate 33 at the same time, and the first reinforcing plate 33 and the second communication portion 32 are integrally formed, so as to facilitate the molding of the entire adapter structure 30.

Referring to FIG. 14, in one embodiment of the present application, the battery mounting box 100 further includes a partition plate 19. The frame 24 is divided into an upper communication portion 12 and a lower supporting portion 13 by the partition plate 19. The upper communication portion 12 is provided with a first cavity 121 communicating with the pressure relief hole 111. So, the upper communication portion 12 forms with the pressure relief hole 111 and the lower supporting portion 13 is separately arranged, by arranging the frame 24 to include the upper communication portion 12 at an upper part thereof and the lower supporting portion 13 at a lower part thereof. So, the structural strength of the lower supporting portion 13 is increased, thereby increasing the structural strength of welding the frame 24 and the bottom plate 18, for example, by providing the lower supporting portion 13 as a solid structure or by providing the lower supporting portion 13 as a cavity structure in which a reinforcing structure is formed.

Specifically, in order to reduce the weight of the entire frame 24 so as to reduce the weight of the entire battery pack and facilitate welding of the lower supporting portion 13 and the bottom plate 18, the lower supporting portion 13 is formed with the second cavity 131, and the lower supporting portion 13 is provided with the second reinforcing plate 132. So, the weight of the entire frame 24 can be reduced by such a manner that the cavity is formed in the lower supporting portion 13. The structural strength of the frame 24 when it is welded with the bottom plate 18 can be ensured by providing the second reinforcing plate 132 in the second cavity 131.

Since the lower end portion of the lower support portion 13 needs to be welded to the bottom plate 18, in order to ensure the structural strength of the lower supporting portion 13 when welded, the second reinforcing plate 132 extends along the height direction of the frame 24. That is, the second reinforcing plate 132 is connected to the lower end portion of the lower supporting portion 13, so that the structural strength of the frame 24 is increased.

In order to increase the structural strength of the upper communication portion 12, a reinforcing plate may be provided in the upper communication portion 12.

Specifically, referring to FIG. 11, when the first cavity 121 of the upper communication portion 12 is blocked, a second blocking plate 14 and a third blocking plate 15 are welded at opposite ends of the first cavity 121, so that the first cavity 121 is blocked by two blocking plates.

The second blocking plate 14 is provided at a position which is corresponding to the positions of the frame 24 where the water inlet and the water outlet are provided, so that not only the arrangement of the water inlet and the water outlet is facilitated, but also the welding operation of the second blocking plate 14 is facilitated due to a larger operation space. The third blocking plate 15 is provided between the first and second partial frames 16 and 17 separated from each other, so that the first and second partial frames 16 and 17 are welded after the welding between the first partial frame 16 and the third blocking plate 15 is completed. Thus, there is a larger operation space when the third blocking plate 15 is welded, thereby facilitating the welding operation of the third blocking plate 15.

The present application also provides, in another embodiment, a battery pack including a battery module and the battery mounting box 100 as described above, in which the battery mounting box 100 is configured to mount the battery module.

## Claims

1. A battery mounting box (100) comprising:
a body (10) provided with a pressure relief hole (111);
a supporting structure (40) provided in the body (10), wherein the supporting structure (40) comprises a tray (41) and at least one supporting rib (42) provided at a bottom of the tray (41), the at least one supporting rib (42) is configured to support between the tray (41) and a bottom plate (18) of the body (10) such that a pressure relief cavity (43) is formed between the tray (41) and the bottom plate (18), and the pressure relief cavity (43) and the pressure relief hole (111) are in communication such that gas is capable of discharging through the pressure relief hole (111).

2. The battery mounting box (100) according to claim 1, wherein the pressure relief cavity (43) comprises exhaust passages (431), the body (10) comprises a frame (24) and at least one longitudinal beam (22) disposed in the frame (24), preferably, the at least one longitudinal beam and the frame (24) are integrally formed, the supporting structure (40) comprises a plurality of the at least one supporting rib (42), one of the exhaust passages (431) is formed between every adjacent two of the plurality of supporting ribs (42), the exhaust passages (431) are disposed towards the at least one longitudinal beam (22) respectively, each of the at least one longitudinal beam (22) is provided with at least one pressure relief communication port (221) each communicating the exhaust passages (431) and the pressure relief hole (111).

3. The battery mounting box (100) according to claim 2, wherein the at least one pressure relief communication port (221) is provided at one end of the longitudinal beam (22), and the plurality of supporting ribs (42) are obliquely arranged toward the at least one pressure relief communication port (221); preferably, the body (10) comprises two of the at least one longitudinal beam (22) which are oppositely arranged, shapes of the plurality of supporting ribs (42) are V-shaped, and each of openings of the plurality of supporting ribs (42) faces towards the at least one pressure relief communication port (221) of a respective one of the at least one longitudinal beam.

4. The battery mounting box (100) according to any one of claims 2 to 3, wherein each of the at least one longitudinal beam (22) is provided with a first supporting plate (222) configured to support the tray (41).

5. The battery mounting box (100) according to claim 4, wherein a distance is formed between the at least one longitudinal beam (22) and the bottom plate (18), and another distance is formed between the first supporting plate (222) and the bottom plate (18); and the at least one pressure relief communication port (221) is provided on a bottom wall, which faces towards the bottom plate (18), of the longitudinal beam (22).

6. The battery mounting box (100) according to any one of claims 2-5, wherein each of the at least one longitudinal beam (22) is provided with at least one reinforcing plate (223) along a longitudinal direction of the longitudinal beam (22); and/or third reinforcing ribs (181) are provided on the bottom plate (18), and the third reinforcing ribs (181) are configured to support the at least one supporting rib (42).

7. The battery mounting box (100) according to claim 4, wherein the body (10) further comprises at least one transverse beam (23), the at least one longitudinal beam (22), the at least one transverse beam (23) and the body (10) communicate with each other in sequence, the at least one transverse beam (23) is each provided with a second supporting plate (232), and the second supporting plate (232) and the first supporting plate (222) are arranged to jointly support the tray (41).

8. The battery mounting box (100) according to any one of claims 2 to 7, wherein the frame (24) is of a hollow structure, the hollow structure is provided with at least one first reinforcing rib (101) arranged in a first direction and at least one second reinforcing rib (102) arranged in a second direction, each of the at least one second reinforcing rib (102) is connected with the bottom plate of the body (10) and a corresponding one of the at least one first reinforcing rib (101), and the first direction and the second direction are perpendicular.

9. The battery mounting box (100) according to any one of claims 1-8, further comprising:
a beam body (20) in which a pressure relief channel (21) is formed, wherein the pressure relief cavity (43) communicates with the pressure relief channel (21);
an adapter structure (30), wherein two ends of the adapter structure (30) communicate with the pressure relief channel (21) and the pressure relief hole (111), one end, which communicates with the pressure relief hole (111), of the adapter structure (30) has a higher height than an other end, which communicates with the pressure relief channel (21), of the adapter structure (30) along a height direction of the body (10).

10. The battery mounting box (100) according to claim 9, wherein the beam body (20) comprises at least one longitudinal beam (22) and at least one transverse beam (23), the at least one longitudinal beam (22) and the at least one transverse beam (23) are each provided with a segment of the pressure relief channel (21), the segment of the pressure relief channel (21) of each of the at least one longitudinal beam (22) and the segment of the pressure relief channel (21) of each of the at least one transverse beam (23) communicate with each other in sequence, the at least one longitudinal beam (22) is each provided with at least one pressure relief communication port (221) communicating with the pressure relief cavity (43), and the adapter structure (30) communicates with the segment of the pressure relief channel (21) of the transverse beam (23) and the pressure relief hole (111).

11. The battery mounting box (100) according to any one of claims 9 to 10, wherein the adapter structure (30) extends along a length direction of the at least one longitudinal beam (22) and is provided with a second communication port (311) and a third communication port (321) which communicate with each other, an arrangement position of the third communication port (321) has a higher height than an arrangement position of the second communication port (311), the second communication port (311) communicates with the segment of the pressure relief channel (21) of the transverse beam (23), and the third communication port (321) communicates with the pressure relief hole (111).

12. The battery mounting box (100) according to any one of claims 9 to 11, wherein an adapter-structure pressure relief cavity (34) is formed in the adapter structure (30), and the adapter-structure pressure relief cavity (34) communicates with the pressure relief hole (111) and the segment of the pressure relief channel (21) of the transverse beam (23), respectively.

13. The battery mounting box (100) according to claim 12, wherein the adapter structure (30) is provided with a first reinforcing plate (33) preferably integrally formed with the adapter structure (30) in the adapter-structure pressure relief cavity (34), the first reinforcing plate (33), preferably a distance is formed between the first reinforcing plate (33) and the body (10), divides the adapter-structure pressure relief cavity (34) into an upper cavity (322) and a lower cavity (312) communicate with each other in the height direction of the body (10), the upper cavity (322) comprises the third communication port (321), and the lower cavity (312) comprises the second communication port (311).

14. The battery mounting box (100) according to any one of claims 9 to 13, wherein a side of the adapter structure (30) which faces toward the transverse beam (23) forms a stepped notch (323).

15. The battery mounting box (100) according to any one of claims 1 to 14, further comprising a partition plate (19), an interior of the body (10) is divided by the partition plate (19) into an upper communication portion (12) provided with a first cavity (121) communicating with the pressure relief hole (111) and a lower supporting portion (13) configured to be connected to the bottom plate (18), the lower supporting portion is preferably formed with a second cavity (131) in which a second reinforcing plate (132) preferably extended in the height direction of the body (10) is provided.

16. A battery pack comprising:
a battery module;
the battery mounting box (100) of any of claims 1 to 15, wherein the supporting structure (40) in the battery mounting box (100) is configured to support the battery module.
